# EUROPEAN PATENT APPLICATION

(11) **EP 4 749 186 A1**
(43) Date of publication of application: **27.05.2026**
(21) Application number: 25162903.6
(22) Date of filing: 11.03.2025
(51) Int. Cl.: F23G 5/027, F23G 5/033, F23G 5/46, F23J 15/00

(54) **METHOD AND SYSTEM FOR COMPLETE UTILIZATION OF COMBUSTIBLE WASTE WITH ELECTRICITY GENERATION AND ASH VITRIFICATION**

(30) Priority: 21.11.2024 BG 11400024
(71) Applicant: Abex Green Energy Ltd., 1000 Sofia (BG); Simonski, Krasimir Yordanov, 1404 Sofia (BG)
(72) Inventor: Simonski, Krasimir Yordanov, 1404 SOFIA (BG); Shiryaevsky, Valery Leonardovich, 123181 Moscow (RU)
(74) Representative: Ilarionov, Pavko Jordanov

(57) **Abstract**

This invention relates to a method and system for complete utilization of combustible waste with electricity generation and ash vitrification, which will find application in the field of thermal power generation, in particular for incineration of municipal solid waste, of end-of-life tyres, and of organic waste, for small-scale power generation, and for obtaining granular vitrified inert material.

With the established method and system for the complete utilization of combustible municipal solid waste and tyres used as secondary fuel RDF or TDF, a closed waste-free production is ensured, with minimized risk of toxic emissions polluting the atmosphere. In addition, the volume of waste is reduced, electricity generation is increased, and an environmentally friendly vitrified granular product is produced instead of ash and slag. The resulting glass granular product can be used as a building material in road, civil and industrial construction, in the production of building materials and thermal insulation.

## Description

### Technical field

The present invention relates to a method and system for the complete utilization of combustible waste with electricity generation and ash vitrification, which will find application in the field of thermal power generation, in particular, for incineration of municipal solid waste, of end-of-life tyres, and of organic waste, for small-scale power generation, and for obtaining granular vitrified inert material.

### Background of the invention

Waste incineration is a process in which solid waste is burned at high temperatures in special plants called incinerators to reduce volume and extract energy. The technology is widely used to treat waste that cannot be recycled or reused. Incineration can release pollutants, such as dioxins and heavy metals, which are hazardous to the environment and human health. Municipal solid waste also contains non-combustible materials which are converted into ash and slag during the incineration process and may contain unburnt carbon and carcinogenic substances deposited in the fly ash, creating a risk of toxic emissions to the atmosphere. Landfilling of slag and fly ash must not be allowed, so an effective solution to this environmental problem is to introduce additional treatment, namely vitrification of the molten slag and fly ash, in order to convert them into harmless and useful vitrified inert material.

Methods and devices are known for incinerating waste to generate electricity, melting the inorganic fraction and obtaining inert vitrified material therefrom. For example, patent documents US9702552B2, US9074152B2, RU83123U1 disclose the use of plasma heating using equipment that is complex to operate and has an increased electricity consumption.

Patent documents RU2563374C2, RU2623395C1, KR100568185B1 disclose methods and installations for incinerating unsorted municipal solid waste in a slag melt at temperatures up to 1600°C using aerated or circulating slag melt, which makes the process more expensive and complicated and difficult to implement in practice.

A method and a device for the waste-free thermal treatment of dewatered sludge are known from patent document RU2674005, wherein the dewatered sludge from wastewater is dried by indirect heating with heat from condensation of saturated steam and pelletized. The resulting pellets are fed in a distributed manner for incineration at temperatures up to 1600°C on the surface of the molten slag, with the melting slag minerals being poured into a vitrified slag granulator. The hot flue gases are fed to a heat exchanger to heat an air stream for feeding back into the furnace. After the heat exchanger, they are fed to a steam boiler for high pressure steam production. The steam is fed to a counter-pressure steam turbine to generate electricity, and the outlet steam with reduced parameters is fed to a dryer to dry the sludge. The flue gases, after cooling, are fed to a gas cleaning system and discharged to atmosphere. The known method and device do not provide complete utilization of combustible municipal solid waste and end-of-life tyres.

### Summary of the invention

The task of the invention is to provide a method and system for complete utilization of combustible waste with power generation and ash vitrification, which provide for a reduction in waste volume, increased electricity production, production of environmentally friendly vitrified granular material, and a reduction in the risk of air pollution by toxic emissions.

The problem was solved by creating a method for complete utilization of combustible waste with power generation and ash vitrification, which includes the following operations:
- shredding of municipal solid waste for secondary fuel (RDF) by a shredder up to 30 mm;
- pelletisation of the secondary fuel from municipal waste by means of a pelletizer, with pellet size up to 30 mm;
- shredding of end-of-life car tyres for secondary fuel (TDF) via a tyre shredder;
- feeding both types of secondary fuel into a storage hopper via conveyors;
- initial heating of the combustion and melting chamber with gas or liquid fuel burners;
- generation of synthesis gas in a gasifier and feeding it to the combustion and melting chamber for burning;
- transfer of the secondary fuel from the storage hopper to pneumatic pushers via distributed feed conveyors;
- loading the secondary fuel into the combustion and melting chamber by pneumatic pushers;
- oxidation of the organic fraction of the fuel in the combustion and melting chamber with heat release at temperatures up to 1600°C and in excess of oxygen on the surface of the liquid slag, with subsequent melting of the mineral fraction of the fuel;
- increasing the combustion efficiency of the fuel by oxygen enrichment of the air stream supplied by a system for bubbling the molten slag layer and reducing the viscosity of the liquid slag by means of an ohmic heating module;
- discharge of residual ash from the gasifier into the combustion and melting chamber;
- pouring the molten liquid slag together with the ash from the gasifier into a liquid slag granulator for vitrification;
- cooling the flue gases generated during the combustion of the fuel in a high temperature flue to a temperature of 1000-1100°C by means of cool air supplied by a cooling air module ;
- homogeneous suppression of the nitrogen oxides concentration in the high temperature flue by injection of urea solution to a nitrogen oxide normalisation reactor;
- supply of the purified air to a heat exchanger for heating an air stream with the flue gas heat, which is then fed back to the combustion and melting chamber through a duct, enriched meanwhile with oxygen by a membrane or adsorption oxygen generator;
- feeding the hot flue gases from the heat exchanger, through a flue, to a steam generator to generate steam;
- feeding the generated steam through a steam pipe to a condensing steam turbine for electricity generation;
- feeding additional steam from an external steam source to the steam pipe connecting the steam generator to the condensing steam turbine;
- additional superheating of the steam collected in the steam pipe, upstream of the condensing steam turbine, by a steam superheater to increase the power generated;
- feeding of the cooled flue gases from the steam generator via a flue pipe to a flue gas cleaning system;
- exhaust of the treated flue gases through a ventilation module and through a stack to the atmosphere.

The task was solved by creating also a complete combustible waste utilization system with electricity generation and ash vitrification to implement the method. The designed system includes a combustion and melting chamber connected to burners and a liquid slag granulator. The combustion and melting chamber are connected via a high temperature flue to a heat exchanger. The heat exchanger is in turn connected via a flue to a steam generator, which is connected to a steam turbine to generate electricity. The steam generator is connected to a stack via a flue gas cleaning system and a ventilation module.

According to the invention, the system comprises a municipal solid waste hopper connected to a municipal solid waste shredder and to a combustible waste gasifier for producing synthesis gas. The municipal solid waste shredder is connected via a conveyor to a pelletizer, which is connected via another conveyor to a storage hopper. The system also includes a used tyre hopper connected to the tyre shredder, which is connected via a conveyor to the storage hopper. The storage hopper is connected by a system of fuel distribution conveyors to pneumatic pushers connected to the combustion and melting chamber. Connected to the combustion and melting chamber, there are the combustible waste gasifier to produce synthesis gas, a module for ohmic heating of the liquid slag and a system for bubbling the molten slag layer. The high-temperature flue is equipped with a reactor for the normalisation of nitrogen oxides and a cooling air supply module is connected to the high-temperature flue. The heat exchanger is connected via an air duct back to the combustion and melting chamber and an oxygen generator is connected to the air duct. The steam generator is connected via a steam pipe and a steam superheater to a condensing steam turbine with a turbogenerator for power generation. An external steam source is also connected to the steam pipe.

The advantages of the present invention are that complete utilization of combustible municipal solid waste and end-of-life tyres is achieved, with minimal risk of toxic air pollution. It also has the advantage of ensuring the production of a useful incineration product - environmentally friendly vitrified granular material instead of ash and slag, which vitrified granular material can be used as a building material in road, civil and industrial construction, in the production of building materials and thermal insulation.

### Brief description of the drawing

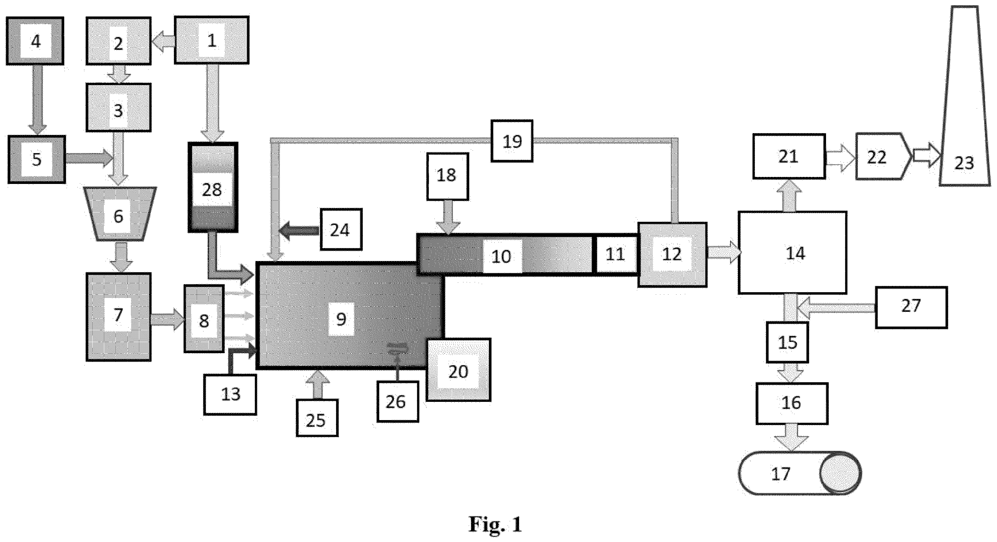

This invention is illustrated in the attached Figure 1, which is a schematic in principle of the system for the complete utilization of combustible waste with electricity generation and vitrification of the ash, according to the invention.

### Examples of embodiments of the invention

The designed system for complete combustible waste utilization with electricity generation and ash vitrification, shown in Figure 1, includes a municipal solid waste hopper 1 connected to a municipal solid waste shredder 2 and to a combustible waste gasifier 28 for producing synthesis gas. The municipal solid waste shredder 2 is connected via a conveyor to a pelletizer 3, which is connected via another conveyor to a storage hopper 6. The system also includes a used tyre hopper 4 connected to an tyre shredder 5, which is connected via a conveyor to the storage hopper 6. The storage hopper 6 is connected by a system of fuel distribution conveyors 7 to pneumatic pushers 8 connected to a combustion chamber/melter 9. ,A combustible waste gasifier 28 for producing synthesis gas, gas or liquid fuel burners 13, a liquid slag ohmic heating module 26, a molten slag layer bubbling system 25 and a liquid slag granulator 20, are all connected to the combustion and melting chamber 9. The combustion and melting chamber 9 are connected via a high temperature flue 10, provided with a nitrogen oxide normalization reactor 11, to a heat exchanger 12, which is connected via an air duct 19 back to the combustion and melting chamber 9. A cooling air inlet module 18 is connected to the high temperature flue 10, and an oxygen generator 24 is connected to the duct 19. The heat exchanger 12 is connected via a flue to a steam generator 14, which is connected via a steam pipe 15 and via a steam superheater 16 to a condensing steam turbine 17 with a turbine generator for generating electricity. An external steam source 27 is also connected to the steam pipe 15. The steam generator 14, on the other hand, is connected via a flue gas cleaning system 21 and a ventilation module 22 to a stack 23.

The use of the established system to implement the full combustible waste disposal method is as follows:
The municipal solid waste used for secondary RDF fuel from the hopper 1 is shredded by the shredder 2 to pieces of 30 mm and fed to the pelletizer 3 for pelletizing to pellets in size of 30 mm diameter. Pelletizing ensures a low ash content when burning RDF. On the other hand, the tyres used as TDF secondary fuel from hopper 4 are shredded by tyre shredder 5. The two types of secondary fuel, pelletized RDF and shredded TDF, enter the storage hopper 6 via conveyors. In the combustible waste gasifier 28, the municipal solid waste from hopper 1 is heated to temperatures of 700 to 1500°C thus generating syngas by a limited amount of oxygen or steam.

When the system is started up, initial preheating of the combustion and melting chamber 9 is carried out with the gas or liquid fuel burners 13. The synthesis gas generated from the combustible waste gasifier 28 is fed to the combustion and melting chamber 9 for combustion. From the storage hopper 6, the secondary fuel is fed through a system of distributed secondary fuel feed conveyors 7 to pneumatic pushers 8 which push the secondary fuel into the combustion and melting chamber 9. In the combustion and melting chamber 9, oxidation of the organic fraction of the fuel is carried out, with heat release at temperatures up to 1600°C in excess of oxygen at the surface of the liquid slag, with subsequent melting of the mineral fraction of the fuel. In order to increase the combustion efficiency of the fuel in the combustion and melting chamber 9, an air stream supplied by the molten slag layer bubbling system 25 is enriched with oxygen and the viscosity of the liquid slag is reduced by the ohmic heating module 26. The volume of the combustion and melting chamber 9 comprises of a combustion zone and an additional burning zone, where the combustion zone is bounded by loading windows. The passing time of the exhaust gases throughout the additional burning zone shall be at least 2 seconds at a temperature of at least 1400°C and with an oxygen excess of not less than 6%.

The ash from the gasifier 28 is also fed into the combustion and melting chamber 9 and, together with the liquid slag, is poured into the liquid slag granulator 20. The high temperature slag is processed in the liquid slag granulator 20, subjected to vitrification and shaped into granules. The vitrified slag is stored in a solid, glass-like form. This creates a sustainable and safe material for further use, where toxic substances are removed or neutralised.

The flue gases generated during the combustion of the fuel enter the high temperature flue 10 and are cooled by ambient air supplied by the cooling air supply module 18 to lower their temperature to 1000-1100°C. The hot flue gases from the high temperature flue 10 enter the heat exchanger 12 to heat, by using their temperature, an air stream, which is fed through the air duct 19 back into the combustion and melting chamber 9. To homogeneously suppress the concentration of nitrogen oxides, a urea solution from the nitrogen oxide normalization reactor 11 is introduced into the high temperature flue 10. On the other hand, to increase the combustion efficiency of the fuel, the air stream fed from the heat exchanger 12 into the combustion and melting chamber 9 is enriched with oxygen by a membrane or adsorption oxygen generator 24 which introduces the oxygen into the air duct 19.

The heat exchanger 12, through a flue, feeds hot flue gases into the steam generator 14, which is a steam utilization boiler that generates steam with extended parameters. The generated steam is fed through the steam pipe 15 to the condensing steam turbine 17 with a turbogenerator for generating electricity. In order to increase the power generation capacity of the condensing steam turbine 17, an external steam source 27 may be used, which produces additional steam with extended parameters, and feeds it to the steam pipe 15. The external steam source 27 comprises of a biofuel power unit operating on the basis of an internal combustion engine or gas turbine, and a boiler utilizing the heat of the hot flue gases exhausted from the power unit. In addition, to further increase the generated power, further superheating of the steam collected in the steam pipe 15, upstream of the condensing steam turbine 18, by the steam superheater 16 heated by the heat of combustion of the biofuel, is also carried out.

The cooled flue gases from the steam generator 14 are fed via a flue pipe to the flue gas cleaning system 21, after which the cleaned flue gases are vented out by the ventilation module 22 and exhausted to the atmosphere via the stack 23.

## Claims

1. **A method for complete utilization of combustible waste with electricity generation and ash vitrification, characterized in that** it comprises the following operations:
- shredding of municipal solid waste for secondary fuel (RDF) by shredder down to 30 mm;
- pelletisation of the secondary fuel from municipal waste by means of a pelletizer, with pellet size up to 30 mm diameter;
- shredding of end-of-life car tyres for secondary fuel (TDF) via a tyre shredder;
- feeding both types of secondary fuel into a storage hopper via conveyors;
- initial heating of the combustion and melting chamber with gas or liquid fuel burners;
- generation of synthesis gas in a combustible waste gasifier and feeding it to the combustion and melting chamber for burning;
- transfer of the secondary fuel from the storage hopper to pneumatic pushers via distributed feed conveyors;
- pushing the secondary fuel into the combustion and melting chamber via the pneumatic pushers;
- oxidation of the organic fraction of the fuel in the combustion and melting chamber with heat release at temperatures of up to 1600°C and with excess oxygen at the surface of the liquid slag, with subsequent melting of the mineral fraction of the fuel;
- increasing the combustion efficiency of the fuel by oxygen enrichment of the air stream supplied by a system for bubbling the molten slag layer and reducing the viscosity of the liquid slag by means of an ohmic heating module;
- discharge of residual ash from the gasifier into the combustion and melting chamber;
- pouring the molten liquid slag together with the ash from the gasifier into a liquid slag granulator for vitrification;
- cooling of the flue gases generated during the combustion of the fuel in a high temperature flue by means of cool air supplied from a cooling air supply module to a temperature of 1000-1100°C;
- homogeneous suppression of the concentration of nitrogen oxides in the high temperature flue by introduction of a urea solution from a nitrogen oxide normalisation reactor;
- supply of the purified air to a heat exchanger for heating with the flue gas heat of an air stream, which is then fed through a duct back to the combustion and melting chamber, being enriched with oxygen by a membrane or adsorption oxygen generator;
- feeding the hot flue gases from the heat exchanger, through a flue, to a steam generator to generate steam;
- feeding the generated steam through a steam pipe to a condensing steam turbine for electricity generation;
- feeding additional steam from an external steam source to the steam pipe connecting the steam generator to the condensing steam turbine;
- additional superheating of the steam collected in the steam pipe, upstream of the condensing steam turbine, by a steam superheater to increase the generated power;
- feeding of the cooled flue gases from the steam generator via a flue pipe to a flue gas cleaning system;
- exhaust of the treated flue gases through a ventilation module and through a stack to the atmosphere.

2. **A complete combustible waste utilization system with electricity generation and ash vitrification** for carrying out the method according to claim 1, comprising of a combustion chamber coupled with burners, with a liquid slag granulator and through a high temperature flue with a heat exchanger, which in turn is connected via a flue to a steam generator which is connected to a steam turbine for the generation of electricity, the steam generator being connected via a flue gas cleaning system and a ventilation module to a stack, **characterized in that** the system also includes a municipal solid waste hopper (1) connected to a municipal solid waste shredder (2) and to a combustible waste gasifier (28) for producing synthesis gas, wherein the municipal solid waste shredder (2) is connected via a conveyor to a pelletizer (3), which is connected via another conveyor to a storage hopper (6), wherein a tyre shredder (5) is connected to the storage hopper (6) via a conveyor and connected to a tyre hopper (4), wherein the storage hopper (6) is connected to pneumatic pushers (8) connected to the combustion and melting chamber (9) via a system of fuel distribution conveyors (7), wherein combustible waste gasifier (28), a module for ohmic heating of the liquid slag (26) and a system for bubbling the molten slag layer (25) are connected to the combustion and melting chamber (9), the high-temperature flue (10) being provided with a reactor for the normalisation of nitrogen oxides (11), and a cooling air introduction module (18) being connected to the high-temperature flue (10), whereby the heat exchanger (12) is connected via a duct (19) back to the combustion and melting chamber (9), wherein an oxygen generator (24) is connected to the duct (19), wherein the steam generator (14) is connected to a condensing steam turbine (17) via a steam pipe (15) and via a steam superheater (16) to a turbine generator for generating electricity, wherein an external steam source (27) is connected to the steam pipe (15).

## Amended claims

### Amended claims in accordance with Rule 137(2) EPC.

1. **A method for complete utilization of combustible waste with electricity generation and ash vitrification, characterized in that** it comprises the following operations:
- shredding of municipal solid waste for obtaining a first type of secondary fuel (RDF) by a shredder (2) down to 30 mm;
- pelletisation of the first type of secondary fuel from municipal waste by means of a pelletizer (3), with pellet size up to 30 mm diameter;
- shredding of end-of-life car tyres for obtaining a second type of secondary fuel (TDF) via a tyre shredder (5);
- feeding both types of secondary fuel (RDF, TDF) into a storage hopper (6) via conveyors;
- transfer of the secondary fuel from the storage hopper (6) to pneumatic pushers via distributed feed conveyors;
- initial heating of a combustion and melting chamber (9) with gas or liquid fuel burners (13);
- pushing the secondary fuel into the combustion and melting chamber (9) via the pneumatic pushers;
- oxidation of the organic fraction of the secondary fuel in the combustion and melting chamber (9) with heat release at temperatures of up to 1600°C and with excess oxygen at the surface of a layer of molten liquid slag, with subsequent melting of the mineral fraction of the secondary fuel;
- generation of synthesis gas in a combustible waste gasifier (28) and feeding it to the combustion and melting chamber (9) for burning;
- increasing the combustion efficiency of the secondary fuel by oxygen enrichment of an air stream supplied by a system for bubbling the molten liquid slag and reducing the viscosity of the molten liquid slag by means of an ohmic heating module (26);
- discharge of residual ash from the gasifier (28) into the combustion and melting chamber (9);
- pouring the molten liquid slag together with the ash from the gasifier (28) into a liquid slag granulator (20) for vitrification;
- cooling of the flue gases generated during the combustion of the fuel in a high temperature flue (10) by means of cool air supplied from a cooling air supply module (18) to a temperature of 1000-1100°C;
- homogeneous suppression of the concentration of nitrogen oxides in the high temperature flue (10) by introduction of a urea solution from a nitrogen oxide normalization reactor;
- supply of the purified flue gases to a heat exchanger (12) for heating with the flue gas heat of an air stream, which is then fed through a duct (19) back to the combustion and melting chamber (9), and being enriched with oxygen by a membrane or adsorption oxygen generator (24);
- feeding the hot flue gases from the heat exchanger (12), through the flue, to a steam generator (14) to generate steam;
- feeding the generated steam through a steam pipe (15) to a condensing steam turbine (17) for electricity generation;
- feeding additional steam from an external steam source (27) to the steam pipe (15) connecting the steam generator (14) to the condensing steam turbine (17);
- additional superheating of the steam collected in the steam pipe (15), upstream of the condensing steam turbine (17), by a steam superheater (16) to increase the generated power;
- feeding of the cooled flue gases from the steam generator (14) via a flue pipe to a flue gas cleaning system (21);
- exhaust of the treated flue gases through a ventilation module (22) and through a stack (23) to the atmosphere.

2. **A complete combustible waste utilization system with electricity generation and ash vitrification** for carrying out the method according to claim 1, comprising of a combustion chamber coupled with burners, with a liquid slag granulator and through a high temperature flue with a heat exchanger, which in turn is connected via a flue to a steam generator which is connected to a steam turbine for the generation of electricity, the steam generator being connected via a flue gas cleaning system and a ventilation module to a stack, **characterized in that** the system also includes a municipal solid waste hopper (1) connected to a municipal solid waste shredder (2) and to a combustible waste gasifier (28) for producing synthesis gas, wherein the municipal solid waste shredder (2) is connected via a conveyor to a pelletizer (3), which is connected via another conveyor to a storage hopper (6), wherein a tyre shredder (5) is connected to the storage hopper (6) via a conveyor and connected to a tyre hopper (4), wherein the storage hopper (6) is connected to pneumatic pushers (8) connected to the combustion and melting chamber (9) via a system of fuel distribution conveyors (7), wherein combustible waste gasifier (28), a module for ohmic heating of the liquid slag (26) and a system for bubbling the molten slag layer (25) are connected to the combustion and melting chamber (9), the high-temperature flue (10) being provided with a reactor for the normalisation of nitrogen oxides (11), and a cooling air introduction module (18) being connected to the high-temperature flue (10), whereby the heat exchanger (12) is connected via a duct (19) back to the combustion and melting chamber (9), wherein an oxygen generator (24) is connected to the duct (19), wherein the steam generator (14) is connected to a condensing steam turbine (17) via a steam pipe (15) and via a steam superheater (16) to a turbine generator for generating electricity, wherein an external steam source (27) is connected to the steam pipe (15).
